# EUROPEAN PATENT APPLICATION

(11) **EP 4 583 304 A1**
(43) Date of publication of application: **09.07.2025**
(21) Application number: 23882186.2
(22) Date of filing: 07.08.2023
(51) Int. Cl.: H01M 50/609, H01M 10/04, H01M 10/052, H01M 10/058, H01M 50/186, H01M 50/627

(54) **PRODUCTION DEVICE FOR ELECTRICITY STORAGE MODULE AND PRODUCTION METOD FOR ELECTRICITY STORAGE MODULE**

(30) Priority: 28.10.2022 JP 2022172876
(71) Applicant: KABUSHIKI KAISHA TOYOTA JIDOSHOKKI, Kariya-shi, Aichi 448-8671 (JP)
(72) Inventor: FUKUDA, Takashi, Kariya-shi, Aichi 448-8671 (JP)
(74) Representative: TBK
(86) International application number: PCT/JP2023/028792
(87) International publication number: WO 2024/089970

(57) **Abstract**

A manufacturing device 41 includes a fluid injection nozzle 43 that is pressed against a periphery of an opening 31A of a communication hole 31 on a side surface 23s of a sealing body 3 and injects a fluid F into each of a plurality of internal spaces S via the communication hole 31, a first restraining member 44 that restrains a first region F1 provided with the plurality of communication holes 31 in the sealing body 3, and a second restraining member 45 that is provided independently of the first restraining member 44 and restrains a second region F2 including the internal space S in a stacking direction.

## Description

### Technical Field

The present disclosure relates to a manufacturing device for an electricity storage module and a manufacturing method for an electricity storage module.

### Background Art

As an electricity storage module of the related art, for example, there is a bipolar battery described in Patent Literature 1. The electricity storage module of the related art includes a plurality of bipolar electrodes in which a positive electrode is formed on one surface of a current collector and a negative electrode is formed on the other surface. The plurality of bipolar electrodes are stacked so that a separator holding an electrolyte layer is interposed therebetween. Sealing resin is molded and disposed on an outer peripheral portion of the separator.

A manufacturing step of the electricity storage module as described above may include a step of injecting an electrolytic liquid into an internal space formed between the electrodes, or a step of injecting gas into the internal space for airtightness inspection. For example, Patent Literature 2 discloses an injection device that injects an electrolytic liquid into an electricity storage module. In the injection device, a plurality of supply nozzles are pressed against communication holes provided in a sealing body of the electricity storage module to inject the electrolytic liquid into an internal space, which is in a vacuum state via the communication holes. For the injection of the electrolytic liquid, the injection device is provided with a restraining jig that restrains the electricity storage module at a constant pressure or a constant dimension in a stacking direction of the electrodes.

### Citation List

### Patent Literature

Patent Literature 1: Japanese Unexamined Patent Publication No. 2011-151016
Patent Literature 2: Japanese Unexamined Patent Publication No. 2018-106850

### Summary of Invention

### Technical Problem

Restraint of the electricity storage module contributes to suppression of deformation of the electricity storage module when a fluid such as an electrolytic liquid is injected. Meanwhile, in the electricity storage module, dimensional tolerance in a thickness direction (stacking direction of the electrodes) may be different between an electrode stacked body in which a plurality of electrodes are stacked and a sealing body that seals a plurality of internal spaces formed between the electrodes of the electrode stacked body. Here, since a dimension of the electrode stacked body in the stacking direction and the dimension of the sealing body in the stacking direction vary for each electricity storage module, a restraining pressure applied to the electricity storage module changes, and deformation of the electricity storage module may not be appropriately prevented.

The present disclosure has been made to solve the above problems, and an object of the present disclosure is to provide an manufacturing device for an electricity storage module and a manufacturing method for an electricity storage module capable of appropriately preventing deformation during injection of a fluid into each electricity storage module in which dimensional variation occurs due to dimensional tolerance.

### Solution to Problem

A manufacturing device for an electricity storage module according to one aspect of the present disclosure is a manufacturing device for an electricity storage module used for manufacturing an electricity storage module, the electricity storage module including an electrode stacked body in which a plurality of electrodes each including a current collector are stacked, and a sealing body provided at a peripheral edge portion of each of the current collectors to surround the electrode stacked body, configured to seal a plurality of internal spaces located between the current collectors adjacent to each other in a stacking direction, and provided with a plurality of communication holes communicating with each of the plurality of internal spaces, the manufacturing device including: a fluid injection nozzle configured to inject a fluid into each of the plurality of internal spaces via the communication hole by pressing the fluid injection nozzle against a periphery of an opening of the communication hole on a side surface of the sealing body; a first restraining member configured to restrain a first region provided with the plurality of communication holes in the sealing body; and a second restraining member provided independently of the first restraining member and configured to restrain a second region including the internal space in the stacking direction.

In the manufacturing device for the electricity storage module, when a fluid is injected into the internal space from the communication hole by the fluid injection nozzle, the first region provided with the plurality of communication holes and the second region including the internal space in the sealing body can be restrained independently of each other by the first restraining member and the second restraining member. Therefore, even when the electrode stacked body and the sealing body have different dimensions, it is possible to apply a restraining pressure necessary for each of the first region and the second region. With such a configuration, it is possible to appropriately prevent deformation of the electricity storage module during injection of the fluid for each electricity storage module in which dimensional variation is generated due to dimensional tolerance.

A first restraining pressure by the first restraining member may be greater than a second restraining pressure by the second restraining member. Here, it is possible to firmly protect the first region in the sealing body against the pressing of the fluid injection nozzle, while it is possible to avoid application of an excessive restraining force to the electrode stacked body. Therefore, it is possible to prevent breakage of the electrode stacked body caused by the restraining force.

The sealing body may include a plurality of sealing materials covering the peripheral edge portion of each of the current collectors, and a spacer interposed between the sealing materials adjacent to each other in the stacking direction, and the first restraining member may restrain a region where the sealing material and the spacer overlap in the stacking direction as the first region. Here, the first restraining pressure is applied to a region where the sealing material and the spacer overlap in the stacking direction in the first region. Therefore, it is possible to prevent the current collector configuring the electrode and the internal space between the current collectors from being deformed by the first restraining pressure.

A decompression chamber in which the electricity storage module is disposed may be further provided, and the first restraining member and the second restraining member may be provided in the decompression chamber. Here, it is possible to efficiently execute injection of the fluid via the communication hole by decompressing the internal space of the electricity storage module using the decompression chamber. By providing the first restraining member and the second restraining member respectively in the decompression chamber, it is not necessary to attach and detach a restraining member to and from the electricity storage module every time the fluid is injected, and the work process is simplified.

A decompression chamber in which the electricity storage module is disposed may be further provided, the first restraining member may be provided in the decompression chamber, and a wall portion of the decompression chamber may constitute the second restraining member. Here, it is possible to efficiently execute injection of the fluid via the communication hole by decompressing the internal space of the electricity storage module using the decompression chamber. By using the wall portion of the decompression chamber as the second restraining member, it is not necessary to attach and detach the restraining member to and from the electricity storage module every time the fluid is injected, and the work process can be simplified with a simpler configuration.

The second restraining member may be provided with a protrusion corresponding to an exposed portion of the electrode stacked body exposed from the sealing body. Here, contact of the second restraining member with the electrode stacked body can be more reliably ensured by the protrusion. Therefore, even when the dimension between the electrode stacked body and the sealing body is greatly different, the restraining force to the electrode stacked body by the second restraining member can be appropriately applied.

A manufacturing method for an electricity storage module according to one aspect of the present disclosure is a manufacturing method for an electricity storage module used for manufacturing an electricity storage module , the electricity storage module including an electrode stacked body in which a plurality of electrodes each including a current collector are stacked, and a sealing body provided at a peripheral edge portion of each of the current collectors to surround the electrode stacked body, configured to seal a plurality of internal spaces located between the current collectors adjacent to each other in a stacking direction, and provided with a plurality of communication holes communicating with each of the plurality of internal spaces, the manufacturing method including: an injection step of injecting a fluid into each of the plurality of internal spaces via the communication hole by pressing a fluid injection nozzle against a periphery of an opening of the communication hole on a side surface of the sealing body, in which in the injection step, a first region provided with the plurality of communication holes in the sealing body is restrained by a first restraining member, and a second region including the internal space is restrained in the stacking direction by a second restraining member.

In the manufacturing method for the electricity storage module, when a fluid is injected into the internal space from the communication hole by the fluid injection nozzle, the first region provided with the plurality of communication holes and the second region including the internal space in the sealing body are restrained independently of each other by the first restraining member and the second restraining member. Therefore, even when the electrode stacked body and the sealing body have different dimensions, it is possible to apply a restraining pressure necessary for each of the first region and the second region. With such a configuration, it is possible to appropriately prevent deformation of the electricity storage module during injection of the fluid for each electricity storage module in which dimensional variation is generated due to dimensional tolerance.

### Advantageous Effects of Invention

According to the present disclosure, it is possible to appropriately prevent deformation of each of electricity storage modules in which dimensional variation is generated due to dimensional tolerance during injection of a fluid.

### Brief Description of Drawings

FIG. 1 is a schematic cross-sectional view illustrating one embodiment of an electricity storage module.
FIG. 2 is a schematic cross-sectional view illustrating a configuration around a communication hole in a sealing body.
FIG. 3(a) is a schematic side view illustrating a positional relationship between a cell and the communication hole, and FIG. 3(b) is a schematic side view illustrating a positional relationship between a frame body and the communication hole.
FIG. 4 is a schematic partial cross-sectional view illustrating a manufacturing device for an electricity storage module according to one aspect of the present disclosure.
FIG. 5 is a schematic cross-sectional view illustrating a state around the communication hole in an injection step.
FIGS. 6(a) and 6(b) are schematic side views illustrating a relationship between a dimension of an electrode stacked body in a stacking direction between workpieces and a dimension of the sealing body in the stacking direction.
FIG. 7 is a schematic plan view illustrating a first region restrained by a first restraining member and a second region restrained by a second restraining member.
FIG. 8 is a schematic cross-sectional view illustrating the first region restrained by the first restraining member and the second region restrained by the second restraining member.
FIGS. 9(a) and 9(b) are schematic partial cross-sectional views illustrating modifications of the manufacturing device for an electricity storage module.
FIG. 10 is a schematic plan view illustrating a first modification of the first region and the second region.
FIG. 11 is a schematic plan view illustrating a second modification of the first region and the second region.

### Description of Embodiments

Hereinafter, preferred embodiments of a manufacturing device for an electricity storage module and a manufacturing method for an electricity storage module according to one aspect of the present disclosure will be described in detail with reference to the drawings. For convenience of description, each drawing is illustrated according to an orthogonal coordinate system defined by a coordinate axis indicating a first direction D1, a coordinate axis indicating a second direction D2, and a coordinate axis indicating a third direction D3.

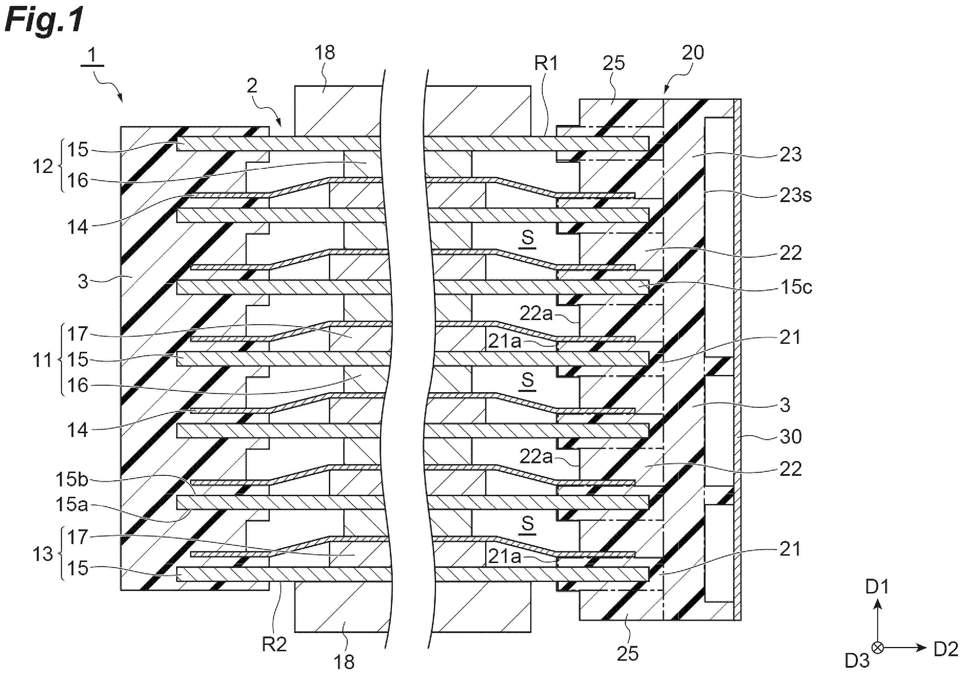

First, a configuration of an electricity storage module to which a manufacturing device for an electricity storage module and a manufacturing method for an electricity storage module according to one aspect of the present disclosure are applied will be described. FIG. 1 is a schematic cross-sectional view illustrating one embodiment of an electricity storage module. As illustrated in FIG. 1, for example, an electricity storage module 1 is a module used for batteries of various vehicles such as forklift trucks, hybrid vehicles, and electric vehicles. The electricity storage module 1 is, for example, a secondary battery such as a nickel-hydrogen secondary battery and a lithium-ion secondary battery. The electricity storage module 1 may be an electric double-layer capacitor or an all-solid-state battery. Herein, an electricity storage module 1 configured as a lithium-ion secondary battery will be illustrated.

The electricity storage module 1 includes an electrode stacked body 2 and a sealing body 3. The electrode stacked body 2 includes a plurality of electrodes stacked along the first direction D1. The first direction D1 is a stacking direction of electrodes in the electrode stacked body 2, and corresponds to a thickness direction of the electricity storage module 1. The second direction D2 and the third direction D3 are in-plane directions of a current collector 15 described below. The second direction D2 corresponds to a depth direction of the electricity storage module 1, and the third direction D3 corresponds to a width direction of the electricity storage module 1.

The plurality of electrodes is configured to include a plurality of bipolar electrodes 11, a positive terminal electrode 12, and a negative terminal electrode 13. The electrode stacked body 2 is formed by stacking the bipolar electrodes 11 between the positive terminal electrode 12 and the negative terminal electrode 13. A separator 14 is disposed between electrodes adjacent to each other in the stacking direction. The bipolar electrode 11 includes the current collector 15, a positive electrode active material layer 16, and a negative electrode active material layer 17. The current collector 15 has, for example, a rectangular sheet shape. The current collector 15 has a first surface 15a as one surface and a second surface 15b as another surface opposite to the first surface 15a. That is, the current collector 15 has the first surface 15a and the second surface 15b opposite to each other in the first direction D1. The positive electrode active material layer 16 is provided on the first surface 15a of the current collector 15. The negative electrode active material layer 17 is provided on the second surface 15b of the current collector 15. The first surface 15a of the current collector 15 is a surface facing one side in the first direction D1, and the second surface 15b of the current collector 15 is a surface facing the other side in the first direction D1.

In the electrode stacked body 2, the plurality of bipolar electrodes 11 are stacked so that the positive electrode active material layer 16 of one bipolar electrode 11 and the negative electrode active material layer 17 of another bipolar electrode 11 adjacent to the one bipolar electrode 11 face each other. The positive electrode active material layer 16 and the negative electrode active material layer 17 have a rectangular shape as viewed from the first direction D1. In the present embodiment, the negative electrode active material layer 17 is slightly larger than the positive electrode active material layer 16 as viewed from the first direction D1. That is, in a plan view from the first direction D1, an entire region where the positive electrode active material layer 16 is formed is located within a region where the negative electrode active material layer 17 is formed.

The positive terminal electrode 12 includes the current collector 15 and the positive electrode active material layer 16 provided on the first surface 15a of the current collector 15. An active material layer is not provided on the second surface 15b of the current collector 15 of the positive terminal electrode 12. The positive terminal electrode 12 is stacked on the bipolar electrode 11 at one end portion of the electrode stacked body 2 in the first direction D1. The positive electrode active material layer 16 of the positive terminal electrode 12 and the negative electrode active material layer 17 of the bipolar electrode 11 adjacent to the positive terminal electrode 12 face each other. The second surface 15b of the current collector 15 in the positive terminal electrode 12 has an exposed portion R1 exposed from the sealing body 3 as one stacked end of the electrode stacked body 2. That is, the second surface 15b of the current collector 15 of the positive terminal electrode 12 serves as a positive electrode terminal surface of the electricity storage module 1.

The negative terminal electrode 13 includes the current collector 15 and the negative electrode active material layer 17 provided on the second surface 15b of the current collector 15. That is, an active material layer is not provided on the first surface 15a of the current collector 15 of the negative terminal electrode 13. The negative terminal electrode 13 is stacked on the bipolar electrode 11 at the other end portion of the electrode stacked body 2 in the first direction D1. The negative electrode active material layer 17 of the negative terminal electrode 13 and the positive electrode active material layer 16 of the bipolar electrode 11 adjacent to the negative terminal electrode 13 face each other. The first surface 15a of the current collector 15 in the negative terminal electrode 13 has an exposed portion R2 exposed from the sealing body 3 as the other stacked end of the electrode stacked body 2. That is, the first surface 15a of the current collector 15 of the negative terminal electrode 13 serves as a negative electrode terminal surface of the electricity storage module 1.

A conductive member 18 is disposed on each of the exposed portion R1 exposed from the sealing body 3 on the first surface 15a of the current collector 15 of the positive terminal electrode 12 and the exposed portion R2 exposed from the sealing body 3 on the second surface 15b of the current collector 15 of the negative terminal electrode 13. The conductive members 18 disposed in the exposed portion R1 and the exposed portion R2 are electrically connected to the electrode stacked body 2 via the exposed portion R1 and the exposed portion R2, respectively, and function as terminals for extracting current from the electricity storage module 1. The conductive member 18 also functions as a restraining member that applies a predetermined restraining load to the electrode stacked body 2. A cooling flow path may be formed in the conductive member 18. The electrode stacked body 2 can be efficiently cooled by circulating a cooling medium in the cooling flow path.

The separators 14 are each disposed between the bipolar electrodes 11 adjacent to each other in the first direction D1, between the positive terminal electrode 12 and the bipolar electrode 11, and between the negative terminal electrode 13 and the bipolar electrode 11. The separator 14 is disposed between the positive electrode active material layer 16 and the negative electrode active material layer 17 between the electrodes. The separator 14 has a role of separating the positive electrode active material layer 16 and the negative electrode active material layer 17, thereby preventing a short circuit due to contact between adjacent electrodes and allowing a charge carrier such as a lithium ion to pass.

The separator 14 is made of, for example, a porous sheet or a nonwoven fabric including a polymer that absorbs and holds an electrolyte. Examples of a material of the separator 14 include polypropylene, polyethylene, polyolefin, and polyester. The separator 14 may have either a single layer structure or a multilayer structure. In the case of the multilayer structure, the separator 14 may have, for example, a ceramic layer as an adhesive layer or a heat resistant layer.

The separator 14 may be impregnated with an electrolyte. Examples of the electrolyte with which the separator 14 is impregnated include a liquid electrolyte (electrolytic liquid) containing a non-aqueous solvent and an electrolytic salt dissolved in the non-aqueous solvent. Examples of the electrolytic salt in the electrolytic liquid include lithium salts such as LiClO₄, LiAsF₆, LiPF₆, LiBF₄, LiCF₃SO₃, LiN(FSO₂)₂, and LiN(CF₃SO₂)₂. As the non-aqueous solvent, for example, solvents such as cyclic carbonates, cyclic esters, chain carbonates, chain esters, and ethers are used. Two or more of the solvents may be used in combination.

The current collector 15 is a chemically inactive conductor that continuously supplies current to the positive electrode active material layer 16 and the negative electrode active material layer 17 during discharge or charge of a lithium-ion secondary battery. Examples of a material of the current collector 15 include a metal material, a conductive resin material, and a conductive inorganic material. Examples of the conductive resin material include conductive polymer materials, and resins obtained by adding a conductive filler to a non-conductive polymer material as necessary. The current collector 15 may include a plurality of layers. Here, each layer of the current collector 15 may contain the above-described metal material or conductive resin material.

A covering layer may be formed on a surface of the current collector 15. The covering layer is formed by a method such as plating or spray coating. The current collector 15 has various shapes such as a plate shape, a foil shape (for example, a metal foil), a film shape, and a mesh shape. Examples of the metal foil include an aluminum foil, a copper foil, a nickel foil, a titanium foil, and a stainless steel foil. The current collector 15 may be a foil of an alloy of the above-described metal or a foil in which a plurality of metal foils are integrated. When the current collector 15 has a foil shape, a thickness of the current collector 15 may be, for example, 1 µm to 100 µm.

The positive electrode active material layer 16 is a layer containing a positive electrode active material capable of occluding and releasing charge carriers such as lithium ions. Examples of the positive electrode active material include a lithium composite metal oxide having a stratified rock salt type structure, a metal oxide having a spinel structure, and a polyanionic compound. The positive electrode active material layer 16 may contain a plurality of positive electrode active materials. In the present embodiment, the positive electrode active material layer 16 contains olivine type lithium iron phosphate (LiFePO₄) as a composite oxide.

The negative electrode active material layer 17 is a layer containing a negative electrode active material capable of occluding and releasing charge carriers such as lithium ions. The negative electrode active material may be any of a simple substance, an alloy, and a compound. Examples of the negative electrode active material include Li, carbon, and metal compounds. The negative electrode active material may be an element that can be alloyed with lithium and a compound of such an element. Examples of the carbon include natural graphite, artificial graphite, hard carbon (non-graphitizing carbon), and soft carbon (graphitizing carbon). Examples of the artificial graphite include highly oriented graphite and meso-carbon microbeads. Examples of the element that can be alloyed with lithium include silicon and tin. In the present embodiment, the negative electrode active material layer 17 contains graphite as a carbon-based material.

Each of the positive electrode active material layer 16 and the negative electrode active material layer 17 may further contain a conductive aid, a binder, an electrolyte (polymer matrix, ion conductive polymer, electrolytic liquid, or the like) for enhancing conductivity, a supporting electrolytic salt (lithium salt) for enhancing ion conductivity, and the like as necessary. The conductive aid is added to enhance conductivity of each of electrodes (the bipolar electrodes 11, the positive terminal electrode 12, and the negative terminal electrode 13). As the conductive aid, for example, acetylene black, carbon black, graphite, or the like is used.

Examples of the binder include fluorine-containing resins such as polyvinylidene fluoride, polytetrafluoroethylene, and fluororubber, thermoplastic resins such as polypropylene and polyethylene, imide resins such as polyimide and polyamidimide, alkoxysilyl group-containing resins, acrylic resins such as acrylic acid and methacrylic acid, alginates such as styrene-butadiene rubber (SBR), carboxymethyl cellulose, sodium alginate, and ammonium alginate, water-soluble cellulose ester crosslinked bodies, and starch-acrylic acid graft polymers. The binders can be used alone or in combination. For example, water, N-methyl-2-pyrrolidone (NMP) or the like is used as a solvent.

The sealing body 3 is formed in a frame shape at a peripheral edge portion of the electrode stacked body 2 to surround the electrode stacked body 2. The sealing body 3 is bonded to each of the first surface 15a and the second surface 15b of the current collector 15 at a peripheral edge portion 15c of each current collector 15. The sealing body 3 is provided to form internal spaces S between current collectors 15 adjacent to each other in the first direction D1, and seals each internal space S. The above-described electrolyte (electrolytic liquid) is accommodated in each of the internal spaces S. The sealing body 3 defines the internal space S that accommodates the electrolytic liquid with the current collectors 15 adjacent to each other in the first direction D1, and prevents the electrolytic liquid from leaking out of the internal space S.

The sealing body 3 prevents moisture or the like from intruding into the internal space S from the outside of the electrode stacked body 2. In the present embodiment, the peripheral edge portion of the separator 14 is bonded to the sealing body 3 while being buried in the sealing body 3. The sealing body 3 is formed of, for example, an insulating resin material. Examples of the resin material include polypropylene, polyethylene, polystyrene, ABS resin, acid-modified polypropylene, acid-modified polyethylene, and acrylonitrile styrene resin.

A main body portion 20 of the sealing body 3 includes a plurality of sealing materials 21, a plurality of spacers 22, and a welded end portion 23. The sealing material 21 is provided for each of the current collectors 15. The sealing material 21 has a frame shape and is provided in the peripheral edge portion 15c of the current collector 15. The sealing material 21 covers the first surface 15a, the second surface 15b, and an end surface in the peripheral edge portion 15c of the current collector 15. The sealing material 21 is welded to at least one of the first surface 15a and the second surface 15b of the current collector 15.

The spacer 22 is disposed between the sealing materials 21 adjacent to each other in the first direction D1. The spacer 22 holds a space between the sealing materials 21 adjacent to each other, that is, a space between the current collectors 15 adjacent to each other. The spacer 22 has a frame shape and is disposed on the peripheral edge portion 15c of the current collector 15. The peripheral edge portion of the separator 14 is interposed between the sealing material 21 and the spacer 22. The peripheral edge portion of the separator 14 is welded to at least one of the sealing material 21 and the spacer 22.

In the present embodiment, an edge 22a of each spacer 22 on the internal space S side is located outside an edge 21a of each sealing material 21 on the internal space S side (opposite to the internal space S). When viewed from the first direction D1, in a region between the edge 21a and the edge 22a, an interval is provided between adjacent sealing materials 21. Meanwhile, in a region outside the edge 22a, the spacer 22 is interposed between adjacent sealing materials 21 so that the sealing material 21 and the spacer 22 overlap each other.

The welded end portion 23 has a frame shape that surrounds the electrode stacked body 2 as viewed from the first direction D1. The welded end portion 23 is formed by integrating an edge portion of each sealing material 21 on a side opposite to the internal space S and an edge portion of each spacer 22 on a side opposite to the internal space S by welding. In the present embodiment, the welded end portion 23 is formed by welding a portion in each sealing material 21 located outside the outer peripheral edge of the current collector 15 and a portion in each spacer 22 located outside the outer peripheral edge of the current collector 15 to each other. A side surface 23s located on the side opposite to the internal space S in the welded end portion 23 extends along the first direction D1 and configures a side surface of the main body portion 20, that is, a side surface of the sealing body 3.

The sealing body 3 includes a build-up portion 25 and a frame portion 26. The build-up portion 25 is provided on the outer surface of the sealing material 21 in the first direction D1 provided in the current collector 15 of the positive terminal electrode 12 and the negative terminal electrode 13. The build-up portion 25 is disposed in the same region as the sealing material 21 as viewed from the first direction D1 and is bonded to the sealing material 21. An edge portion of the build-up portion 25 on the side opposite to the internal space S is welded to an edge portion of each sealing material 21 on the side opposite to the internal space S, and configures a part of the welded end portion 23.

The frame portion 26 is bonded to the side surface of the sealing body 3, that is, the side surface 23s of the welded end portion 23. The frame portion 26 extends from the build-up portion 25 on the positive terminal electrode 12 side to the build-up portion 25 on the negative terminal electrode 13 side. Here, an outer edge of the frame portion 26 in the first direction D1 coincides with an outer surface of the build-up portion 25 in the first direction D1. The frame portion 26 may be bonded to the build-up portion 25 or may be formed integrally with the build-up portion 25. The frame portion 26 and the build-up portion 25 may be integrally formed by injection molding, for example. The frame portion 26 is in a state of being closed by a sealing film 30. Accordingly, a plurality of cells of the electricity storage module 1 are sealed. The sealing film 30 is, for example, a resin film or a laminate film.

Hereinafter, a configuration of the sealing body 3 will be described in more detail.

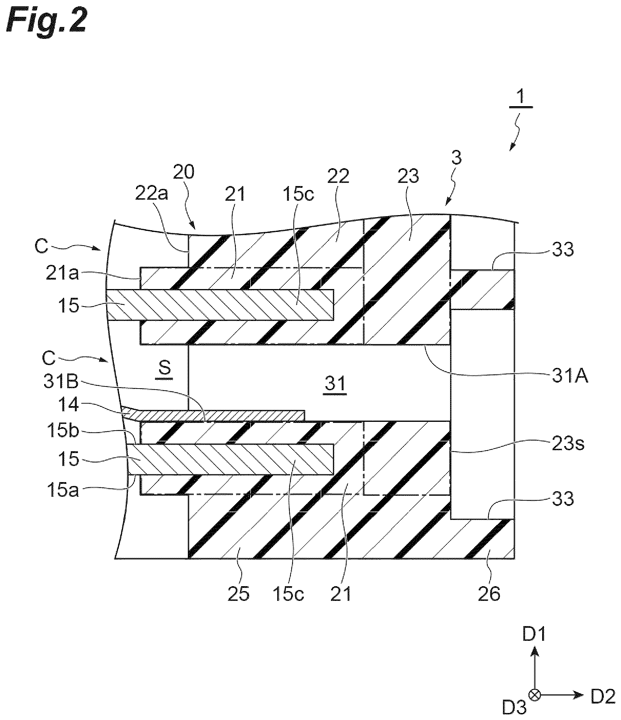

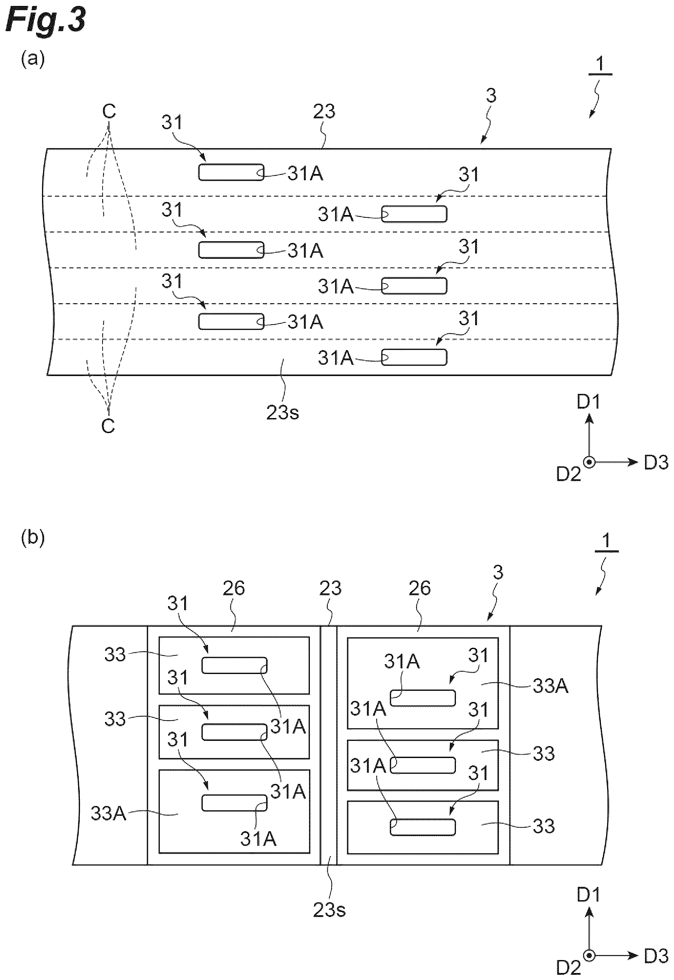

FIG. 2 is a schematic cross-sectional view illustrating a configuration around a communication hole in a sealing body. FIG. 3(a) is a schematic side view illustrating a positional relationship between a cell and the communication hole, and FIG. 3(b) is a schematic side view illustrating a positional relationship between a frame body and the communication hole. For convenience of description, the frame portion 26 and the sealing film 30 are not illustrated in FIG. 3(a), and the sealing film 30 is not illustrated in FIG. 3(b).

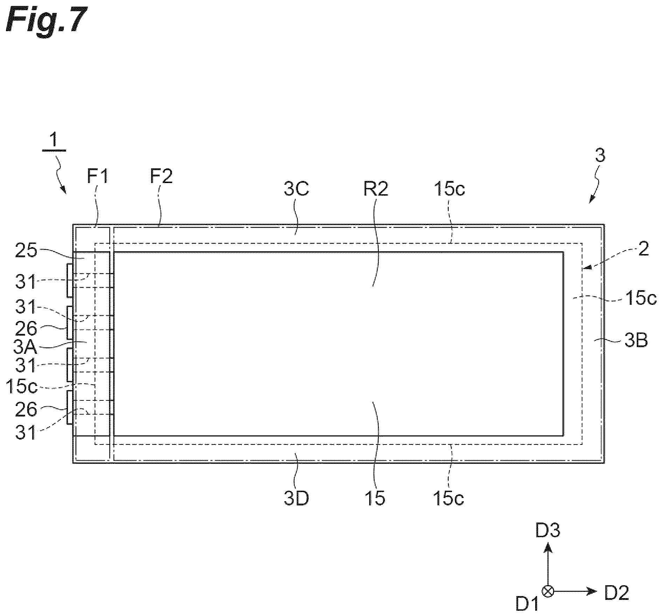

As illustrated in FIGS. 2, 3(a), and 3(b), a plurality of communication holes 31 communicating with each of the plurality of internal spaces S are formed in the main body portion 20 of the sealing body 3. Here, the plurality of communication holes 31 are provided in a wall portion 3A (see FIG. 7) located on one side of the frame-shaped sealing body 3 in the second direction D2. The communication hole 31 is formed to penetrate the spacer 22 and the welded end portion 23 by cutting out a part of the spacer 22, for example. One opening 31A of the communication hole 31 faces the side surface 23s of the welded end portion 23, and another opening 31B faces the internal space S.

In the electricity storage module 1, a pair of the current collectors 15 adjacent to each other in the first direction D1 form a cell C including one internal space S. Here, one communication hole 31 is formed for one cell C. As illustrated in FIG. 3(a), when viewed from the second direction D2 intersecting (orthogonal to) the side surface 23s, the position of the communication hole 31 in the first direction D1 is different for each cell C. The positions of the communication holes 31 of the cells C in the third direction D3 adjacent to each other in the first direction D1 are different from each other. In the examples of FIGS. 3(a) and 3(b), the positions of the communication holes 31 adjacent to each other in the first direction D1 are alternately arranged in the third direction D3.

That is, in the example of FIGS. 3(a) and 3(b), the plurality of communication holes 31 having the same position in the third direction D3 are provided corresponding to every other cell C. When the sealing body 3 is viewed from the second direction D2, a group of openings 31A arranged along the first direction D1 and another group of openings 31A arranged along the first direction D1 are aligned at different positions in the third direction D3 on the side surface 23s.

As illustrated in FIG. 3(b), the frame portion 26 is provided to protrude from the side surface 23s and surround each opening 31A of the plurality of communication holes 31. In the example of FIG. 3(b), a plurality of frame portions 26 are provided for the plurality of communication holes 31. The plurality of frame portions 26 are arranged apart from each other in the third direction D3. Here, one frame portion 26 surrounds each of the group of openings 31A arranged along the first direction D1, and another frame portion 26 surrounds each of another group of openings 31A arranged along the first direction D1.

Each of the plurality of frame portions 26 may be configured to form a plurality of surrounding regions having the same length in the first direction D1, or may be configured to form a plurality of surrounding regions 33 having different lengths in the first direction D1. In the example of FIG. 3(b), each of the frame portions 26 forms three surrounding regions 33. A length of one of the three surrounding regions 33 (surrounding region 33A) in the first direction D1 is longer than the lengths of the other two surrounding regions 33 in the first direction D1.

When the plurality of frame portions 26 is arranged side by side in the third direction D3, arrangement patterns of the surrounding regions 33 of two of the frame portions 26 may be reversed from each other in the first direction. In the example of FIG. 3(b), in the frame portions 26 adjacent to each other in the third direction D3, positions of the surrounding regions 33A in the first direction D1 are different from each other. With such a configuration of the plurality of frame portions 26, each of the openings 31A of the plurality of communication holes 31 at different positions in the first direction D1 can be surrounded by a smaller number of types of frame portions 26.

Subsequently, a manufacturing method for the electricity storage module 1 described above will be described.

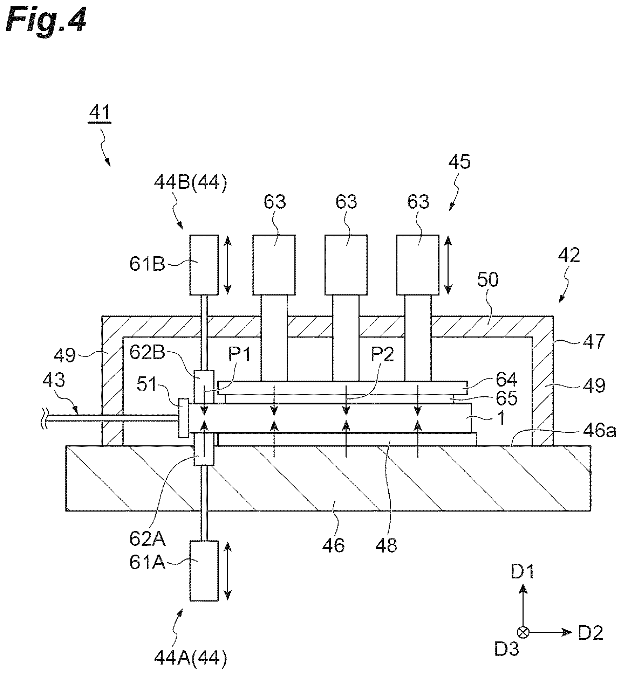

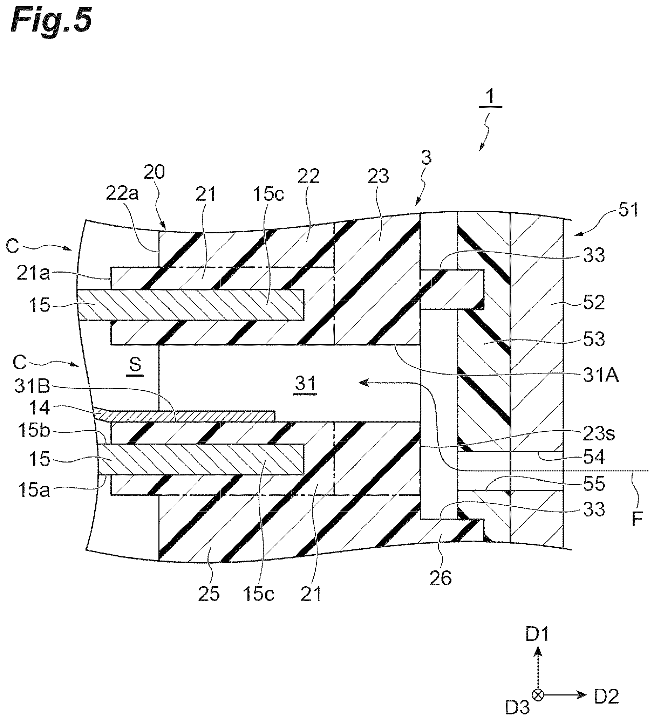

The manufacturing method for the electricity storage module 1 includes an injection step of pressing a fluid injection nozzle 43 (see FIGS. 4 and 5) against the periphery of the opening 31A of the communication hole 31 to inject a fluid F into each of the plurality of internal spaces S via the communication holes 31. Specific examples of the injection step include, for example, a step of injecting an electrolytic liquid into the internal space S and a step of performing airtightness inspection of the electricity storage module 1. In the step of injecting an electrolytic liquid, an electrolytic liquid as the fluid F is injected into the internal space S of each cell C via the communication hole 31.

The step of performing airtightness inspection is performed before the step of injecting an electrolytic liquid. As airtightness inspection, for example, airtightness inspection between the cell and the outside is performed to inspect airtightness of each cell with respect to the outside. Here, the fluid F is an inspection gas. In the airtightness inspection between the cell and the outside, an inspection gas such as helium is injected into the internal spaces S of all the cells C through the communication holes 31, and whether there is a leak of the detection gas is detected by a detection sensor disposed outside the electricity storage module 1. When the inspection gas is not detected by the detection sensor, it is determined that there is no problem in airtightness between the cell and the outside.

FIG. 4 is a schematic partial cross-sectional view illustrating a manufacturing device for an electricity storage module according to one aspect of the present disclosure. As illustrated in FIG. 4, in the present embodiment, the injection step is performed using a manufacturing device 41 for an electricity storage module. The manufacturing device 41 includes a decompression chamber 42, a fluid injection nozzle 43, a first restraining member 44, and a second restraining member 45. In the electricity storage module 1 as a workpiece in the injection step, among the components illustrated in FIG. 1, the conductive member 18 and the sealing film 30 are in a state of not being provided. The conductive member 18 and the sealing film 30 are attached to the workpiece in a step after the injection step, and the electricity storage module 1 illustrated in FIG. 1 is obtained.

The decompression chamber 42 includes a stage 46 and a chamber 47. The stage 46 has a mounting surface 46a on which the electricity storage module 1 is placed. For example, the electricity storage module 1 mounted on a flat pallet 48 is mounted on the mounting surface 46a. The chamber 47 is formed in a box shape by four side wall portions 49 erected on the stage 46 and a roof portion 50 closing a space formed by the stage 46 and the side wall portions 49.

In the chamber 47, one of the four side wall portions 49 is configured to be openable and closable. By opening the side wall portion 49, the electricity storage module 1 placed on the flat pallet 48 can be taken into and out of the chamber 47. Among the four side wall portions 49, a pair of side wall portions 49 and 49 intersecting the side wall portion 49 provided with the fluid injection nozzle 43 may be configured to be openable and closable. Here, the electricity storage module 1 placed on the flat pallet 48 can be introduced into the chamber 47 from one side of the pair of side wall portions 49 and 49, and can be taken out from the other side of the pair of side wall portions 49 and 49 after the injection step is performed. Therefore, the injection step can be performed while the plurality of electricity storage modules 1 are conveyed in one direction, and efficiency of the injection step can be improved.

The fluid injection nozzle 43 is provided in one side wall portion 49 of the chamber 47 to be movable forward and backward with respect to the mounting surface 46a. As illustrated in FIG. 5, the fluid injection nozzle 43 includes a nozzle head 51 that emits the fluid F. As illustrated in FIG. 5, the nozzle head 51 includes a head body 52 and a packing 53, and is disposed in the chamber 47. The head body 52 is provided with a flow path 54 in which the fluid F flows. The packing 53 is provided on a distal end surface of the head body 52. The packing 53 is provided with a discharge hole 55 communicating with the flow path 54.

When the fluid F is injected from the fluid injection nozzle 43 into the internal space S, the fluid injection nozzle 43 advances to the mounting surface 46a side, and the packing 53 of the nozzle head 51 is pressed against the frame portion 26, thereby sealing the surrounding region 33 of the frame portion 26 from the outside. Here, when the fluid F is discharged from the discharge hole 55 of the nozzle head 51, the fluid F is injected into the internal space S of each cell C in the electricity storage module 1 via the communication hole 31.

When injecting the fluid F, the inside of the chamber 47 is evacuated while the electricity storage module 1 is placed therein before the nozzle head 51 is pressed against the frame portion 26, and the internal space S of each cell C in the electricity storage module 1 is depressurized. When injecting the electrolytic liquid, it is possible to efficiently execute injection of the electrolytic liquid via the communication hole 31 by decompressing the internal space S of the electricity storage module 1 using the decompression chamber 42.

When the internal space S of the electricity storage module 1 is decompressed under atmospheric pressure, the electricity storage module 1 is crushed by atmospheric pressure, the current collectors 15 configuring the internal space S are deformed, and an inlet of the internal space S (a portion connected to the communication hole 31) may be closed. As a result, it is considered that injection efficiency of the fluid F such as the electrolytic liquid and the inspection gas is not improved. Meanwhile, by placing the electricity storage module 1 in the decompression chamber 42 and decompressing the outside of the electricity storage module 1 together with the internal space S of the electricity storage module 1, an air pressure difference between the inside and the outside of each cell C is eliminated, and injection efficiency of the fluid F such as the electrolytic liquid and the inspection gas can be sufficiently improved.

The same applies to injection of inspection gas, and it is possible to efficiently execute injection of inspection gas via the communication hole 31 by decompressing the internal space S of the electricity storage module 1 using the decompression chamber 42. By placing the electricity storage module 1 in the decompression chamber 42, influence of the inspection gas contained in the atmosphere is reduced, and accuracy of airtightness inspection can be improved.

The first restraining member 44 and the second restraining member 45 are members that restrain the electricity storage module 1 at a constant pressure or a constant dimension for the purpose of protecting the electrode stacked body 2 and the sealing body 3 from a load during injection of the fluid F. Examples of the load during injection of the fluid F include a pressing force applied to the main body portion 20 of the sealing body 3 when the fluid injection nozzle 43 is pressed against the periphery of the opening 31A of the communication hole 31, an expansion force of the internal space S due to the injection of the fluid F, and an expansion force of the internal space S due to an air pressure difference between the inside and the outside of the cell C when the cell C is placed in the decompression chamber 42.

It is desirable to apply an appropriate restraining pressure to both a portion of the sealing body 3 against which the fluid injection nozzle 43 is pressed and the electrode stacked body 2 in which the internal space S is located. However, in the electricity storage module 1, dimensional tolerance in the thickness direction (the first direction D1/the stacking direction of the electrodes) may be different between the electrode stacked body 2 in which the plurality of electrodes are stacked and the sealing body 3 that seals the internal space S formed between the electrodes of the electrode stacked body 2. Since dimensional tolerance in the stacking direction during manufacturing is different between the electrode stacked body 2 and the sealing body 3, the dimension in the stacking direction may be different between the electrode stacked body 2 and the sealing body 3 for each electricity storage module 1 (workpiece).

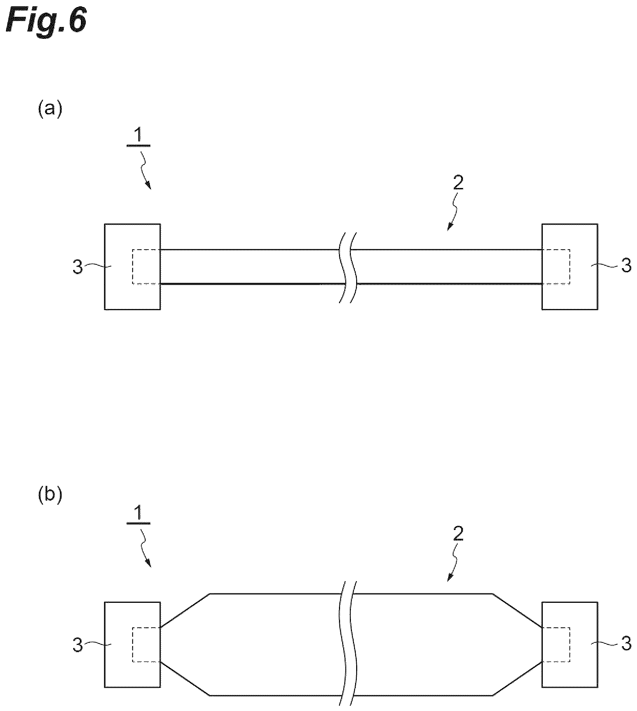

For example, it is conceivable that dimensional tolerance in the stacking direction of the electrode stacked body 2 in which the plurality of electrodes are stacked is larger than dimensional tolerance of the sealing body 3 in the stacking direction. In a certain workpiece, as illustrated in FIG. 6(a), the dimension of the electrode stacked body 2 in the stacking direction may be smaller than the dimension of the sealing body 3 in the stacking direction. In the certain workpiece, the end surface (here, the first surface 15a of the current collector 15 of the positive terminal electrode 12 and the second surface 15b of the current collector 15 of the negative terminal electrode 13) of the electrode stacked body 2 in the stacking direction is recessed with respect to the end surface (here, the outer surface in the first direction D1 of the sealing material 21 provided in the current collector 15 of the positive terminal electrode 12 and the negative terminal electrode 13) of the sealing body 3 in the stacking direction.

In another certain workpiece, as illustrated in FIG. 6(b), the dimension of the electrode stacked body 2 in the stacking direction may be larger than the dimension of the sealing body 3 in the stacking direction. In the certain workpiece, the end surface (here, the first surface 15a of the current collector 15 of the positive terminal electrode 12 and the second surface 15b of the current collector 15 of the negative terminal electrode 13) of the electrode stacked body 2 in the stacking direction swells with respect to the end surface (here, the outer surface in the first direction D1 of the sealing material 21 provided in the current collector 15 of the positive terminal electrode 12 and the negative terminal electrode 13) of the sealing body 3 in the stacking direction.

When the electrode stacked body 2 and the sealing body 3 of the workpiece as illustrated in FIGS. 6(a) and 6(b) are restrained by a single restraining member with a uniform restraining force, it is conceivable that a restraining pressure for either a portion of the sealing body 3 against which the fluid injection nozzle 43 is pressed or the electrode stacked body 2 in which the internal space S is located becomes insufficient. Meanwhile, in the manufacturing device 41, by including the first restraining member 44 and the second restraining member 45 provided independently of each other, even when the dimension of the electrode stacked body 2 in the stacking direction and the dimension of the sealing body 3 in the stacking direction vary for each electricity storage module 1, it is possible to apply an appropriate restraining pressure to both the portion of the sealing body 3 against which the fluid injection nozzle 43 is pressed and the electrode stacked body 2 in which the internal space S is located.

As illustrated in FIG. 4, the first restraining member 44 includes a cylinder 61 that can expand and contract in the first direction D1, and a restraining plate 62 attached to a distal end of the cylinder 61. In the present embodiment, a pair of first restraining members 44A and 44B is adopted. The first restraining member 44A is provided in the stage 46 of the decompression chamber 42 to be movable forward and backward in the first direction D1. The first restraining member 44B is provided in the roof portion 50 of the chamber 47 to be movable forward and backward in the first direction D1 while facing the first restraining member 44A. The restraining plate 62 is made of, for example, metal or a stacked body of metal and hard resin. Examples of the metal include aluminum and stainless steel (SUS). Examples of the hard resin include hard urethane and acrylic resin.

Both the restraining plate 62A and the restraining plate 62B are disposed in the chamber 47. For example, the restraining plate 62A and the restraining plate 62B have the same planar shape. By cooperation of a cylinder 61A of the first restraining member 44 and a cylinder 61B of the second restraining member 45, the electricity storage module 1 as a workpiece is interposed between the restraining plate 62A and the restraining plate 62B, thereby applying a restraining pressure to a predetermined region of the electricity storage module 1.

The first restraining member 44 restrains a first region F1 of the sealing body 3 in which the plurality of communication holes 31 are provided by a first restraining pressure P1. In the present embodiment, the first restraining pressure P1 by the first restraining member 44 is applied to the first region F1 in the stacking direction (the first direction D1). The first region F1 is a region where the sealing material 21 and the spacer 22 overlap in the stacking direction. In the present embodiment, as illustrated in FIG. 7, when the electricity storage module 1 is viewed from the stacking direction, the first region F1 is a rectangular region (having a pair of long sides and a pair of short sides) corresponding to the wall portion 3A of the sealing body 3 provided with the plurality of communication holes 31.

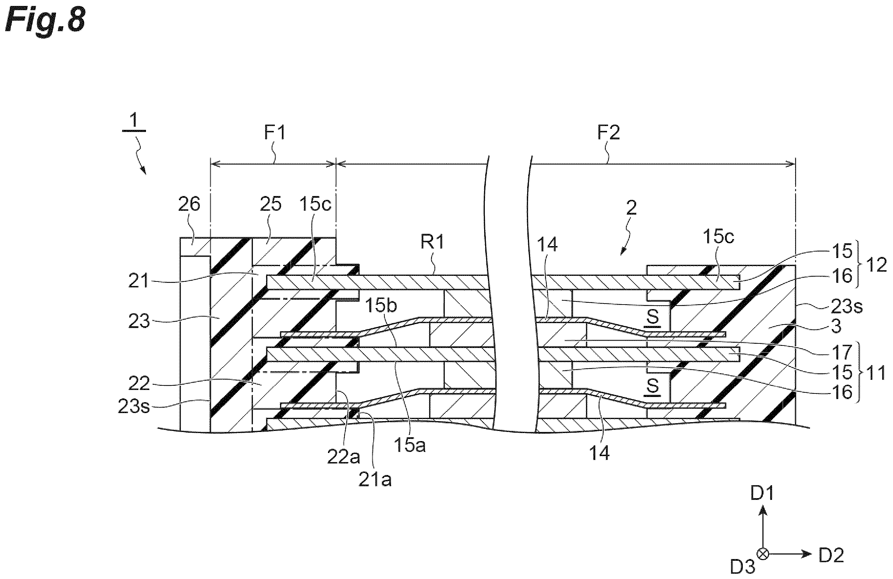

More specifically, as illustrated in FIGS. 7 and 8, the first restraining member 44 restrains a region outside the edge 22a of the spacer 22 of the wall portion 3A on the internal space S side as viewed from the first direction D1 as the first region F1. That is, the first region F1 extends across the edge 22a of the spacer 22 on the inner space S side and the side surface 23s of the welded end portion 23 of the wall portion 3A in the second direction D2.

In the present embodiment, as described above, the build-up portion 25 is provided on the outer surface of the sealing material 21 in the first direction D1 provided in the current collector 15 of the positive terminal electrode 12 and the negative terminal electrode 13. In the example of FIG. 7, an entire formed region of the build-up portion 25 is included in the first region F1. Note that the lengths of the restraining plate 62A and the restraining plate 62B in the third direction D3 between which the first region F1 is interposed may be larger than the length of the first region F1 in the third direction D3.

As illustrated in FIG. 4, the second restraining member 45 includes a plurality of cylinders 63 that can expand and contract in the first direction D1, and a restraining plate 64 attached to distal ends of the plurality of cylinders 63. The second restraining member 45 is provided in the roof portion 50 of the chamber 47 to be movable forward and backward in the first direction D1 while facing the mounting surface 46a of the stage 46. The restraining plate 64 is disposed in the chamber 47 side by side with the restraining plate 62B. By driving of the cylinder 63, the electricity storage module 1 as a workpiece is interposed between the restraining plate 64 and both the stage 46 and the pallet 48, thereby applying a restraining pressure to a predetermined region of the electricity storage module 1. The restraining plate 64 is made of metal, for example. Examples of the metal include aluminum and stainless steel (SUS).

The second restraining member 45 restrains a second region F2 including the internal space S by a second restraining pressure P2. In the present embodiment, the second restraining pressure P2 by the second restraining member 45 is applied to the second region F2 in the first direction D1. In the present embodiment, as illustrated in FIG. 7, when the electricity storage module 1 is viewed from the stacking direction, the second region F2 is a rectangular region (having a pair of long sides and a pair of short sides) corresponding to the exposed portions R1 and R2 and three wall portions 3B, 3C, and 3D of the sealing body 3 excluding the wall portion 3A.

More specifically, as illustrated in FIGS. 7 and 8, the second restraining member 45 restrains a region opposite to the first region F1 with the edge 22a of the spacer 22 of the wall portion 3A on the internal space S side as a boundary when viewed from the first direction D1 as the second region F2. That is, the second region F2 extends across the edge 22a of the spacer 22 on the inner space S side and the side surface 23s of the welded end portion 23 of the wall portion 3B in the second direction D2. Note that the length of the restraining plate 64 by which the second region F2 is interposed may be larger than the length of the second region F2 in the third direction D3.

In the present embodiment, as illustrated in FIG. 4, the second restraining member 45 is provided with a protrusion 65 corresponding to the exposed portion R1 of the electrode stacked body 2 exposed from the sealing body 3. A planar shape of the protrusion 65 is, for example, the same as a planar shape of the exposed portion R1. The protrusion 65 is formed, for example, by thickening a part of the restraining plate 64 of the second restraining member 45. Accordingly, when the second restraining member 45 restrains the electricity storage module 1, the thick protrusion 65 faces the exposed portion R1 of the electrode stacked body 2, and a peripheral portion thinner than the protrusion 65 faces each of the wall portions 3B, 3C, and 3D of the sealing body 3.

In the present embodiment, the first restraining pressure P1 by the first restraining member 44 is greater than the second restraining pressure P2 by the second restraining member 45. As a result, a strong restraining pressure that can withstand a load due to pressing of the fluid injection nozzle 43 can be applied to the first region F1. Meanwhile, the second restraining pressure P2 may be freely set as long as deformation of the electrode stacked body 2 due to expansion of the internal space S can be prevented, and a restraining pressure weaker than the first restraining pressure P1 may be sufficient in some cases. By setting the second restraining pressure P2 to not be excessively large, it is possible to prevent damage of the electrode stacked body 2 (breakage or deformation of the current collector 15) due to restraint.

When the injection step is performed using the manufacturing device 41 described above, first, the electricity storage module 1 as a workpiece is disposed in the chamber 47 of the decompression chamber 42. Next, by driving the cylinder 61 of the first restraining member 44 with respect to the electricity storage module 1 in the chamber 47, the first region F1 of the electricity storage module 1 is interposed between the restraining plates 62A and 62B. As a result, the first region F1 of the sealing body 3 provided with the plurality of communication holes 31 is restrained by the first restraining member 44 by the first restraining pressure P1 in the stacking direction.

By driving the cylinder 63 of the second restraining member 45 with respect to the electricity storage module 1 in the chamber 47, the second region F2 of the electricity storage module 1 is interposed between the restraining plate 64 and both the stage 46 and the pallet 48. As a result, the second region F2 including the exposed portions R1 and R2 of the electrode stacked body 2 is restrained by the second restraining member 45 by the second restraining pressure P2. Any of the restraint by the first restraining member 44 and the restraint by the second restraining member 45 may be performed first, or both may be performed simultaneously.

After the restraint by the first restraining member 44 and the restraint by the second restraining member 45 are performed, the chamber 47 is evacuated. As a result, the inside of the chamber 47 is depressurized, and the internal space S of each cell C is exhausted via the plurality of communication holes 31, thereby depressurizing the internal space S. After each internal space S is depressurized, the fluid injection nozzle 43 is pressed against the frame portion 26 around the opening 31A of the communication hole 31, and the fluid F discharged from the nozzle head 51 is injected into the internal space S of each cell C via the communication hole 31. After the injection step is performed, the conductive member 18 and the sealing film 30 are attached to the electricity storage module 1 as a workpiece, thereby obtaining the electricity storage module 1 illustrated in FIG. 1.

As described above, in the manufacturing device 41 and the manufacturing method, when the fluid F is injected into the internal space S from the communication hole 31 by the fluid injection nozzle 43, the first region F1 provided with the plurality of communication holes 31 and the second region F2 including the internal space S in the sealing body 3 can be restrained independently of each other by the first restraining member 44 and the second restraining member 45. Therefore, even when the electrode stacked body 2 and the sealing body 3 have different dimensions, it is possible to apply a restraining pressure necessary for each of the first region F1 and the second region F2. With such a configuration, it is possible to appropriately prevent deformation of the electricity storage module 1 during injection of the fluid F for each electricity storage module 1 in which dimensional variation is generated due to dimensional tolerance. By applying a restraining pressure necessary for each of the first region F1 and the second region F2, the electrode stacked body 2 and the sealing body 3 can be appropriately protected from, for example, expansion and deformation of the electrode stacked body 2 by injection of the fluid F or breakage of the sealing body 3 due to pressing of the fluid injection nozzle 43.

In the present embodiment, the first restraining pressure P1 by the first restraining member 44 is greater than the second restraining pressure P2 by the second restraining member 45. Here, it is possible to firmly protect the first region F1 in the sealing body 3 against the pressing of the fluid injection nozzle 43, while it is possible to avoid application of an excessive restraining force to the electrode stacked body 2. Therefore, it is possible to prevent breakage of the electrode stacked body 2 caused by the restraining force.

In the present embodiment, the sealing body 3 includes a plurality of sealing materials 21 covering the peripheral edge portion 15c of each of the current collectors 15, and the spacer 22 interposed between the sealing materials 21 adjacent to each other in the stacking direction. The first restraining member 44 restrains a region where the sealing material 21 and the spacer 22 overlap in the stacking direction as the first region F1. As a result, the first restraining pressure P1 is applied to the region where the sealing material 21 and the spacer 22 overlap in the stacking direction in the first region F1. Therefore, it is possible to prevent the current collector 15 configuring the electrode and the internal space S between the current collectors 15 from being deformed by the first restraining pressure P1.

In the present embodiment, the manufacturing device 41 further includes the decompression chamber 42 in which the electricity storage module 1 is disposed, and the first restraining member 44 and the second restraining member 45 are provided in the decompression chamber 42. According to such a configuration, it is possible to efficiently execute injection of the fluid F via the communication hole 31 by decompressing the internal space S of the electricity storage module 1 using the decompression chamber 42. By providing the first restraining member 44 and the second restraining member 45 in the decompression chamber 42, it is not necessary to attach and detach the restraining members to and from the electricity storage module 1 every time the fluid F is injected, and the work process is simplified.

In the present embodiment, the second restraining member 45 is provided with the protrusion 65 corresponding to the exposed portion R1 of the electrode stacked body 2 exposed from the sealing body 3. Contact of the second restraining member 45 with the electrode stacked body 2 can be more reliably ensured by the protrusion 65. Therefore, even when the dimension between the electrode stacked body 2 and the sealing body 3 is greatly different, the restraining force to the electrode stacked body 2 by the second restraining member 45 can be appropriately applied.

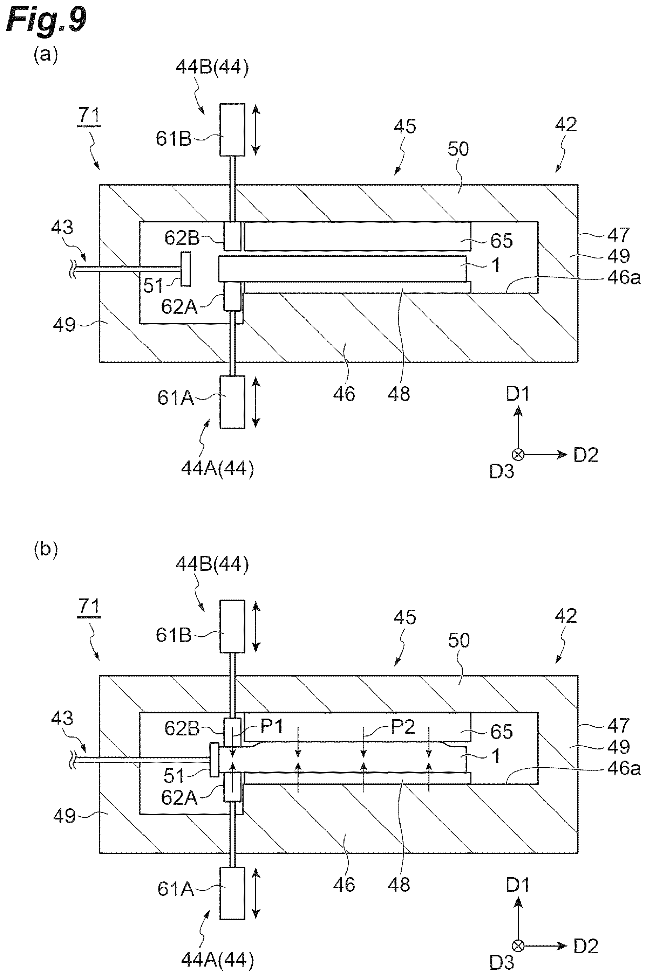

The present disclosure is not limited to the above embodiments. For example, in the above embodiment, the first restraining member 44 and the second restraining member 45 are provided in the decompression chamber 42, but as in a manufacturing device 71 illustrated in FIGS. 9(a) and 9(b), the first restraining member 44 may be provided in the decompression chamber 42, and the wall portion of the decompression chamber 42 may constitute the second restraining member 45. In the manufacturing device 71, the protrusion 65 corresponding to the second region F2 of the electricity storage module 1 is provided in the roof portion 50 to face the stage 46, and the roof portion 50 provided with the protrusion 65 configures the second restraining member 45.

The "second restraining member" of the present disclosure is not limited to a restraining member that restrains the second region F2 in the stacking direction from before injection of the fluid F as in the above-described embodiment, and may include a restraining member that restrains the second region F2 in the stacking direction after start of injection of the fluid F. In the manufacturing device 71, as illustrated in FIG. 9(a), a distance between the protrusion 65 and the stage 46 is set to be slightly larger than a dimension of the electricity storage module 1 in the stacking direction before injection of the fluid. In the manufacturing device 71, as illustrated in Fig. 9(b), in the injection step, the internal space S is expanded by the injection of the fluid F, so that the electricity storage module 1 as a workpiece abuts on the protrusion 65 and an expansion amount is regulated by the protrusion 65.

Even in such a configuration, it is possible to efficiently execute injection of the fluid F via the communication hole 31 by decompressing the internal space S of the electricity storage module 1 using the decompression chamber 42. Since the wall portion (here, the roof portion 50) of the decompression chamber 42 constitutes the second restraining member 45, it is not necessary to attach and detach the restraining member to and from the electricity storage module 1 every time the fluid is injected, and the work process can be simplified with a simpler configuration.

In the above embodiment, the first restraining pressure P1 by the first restraining member 44 is applied to the first region F1 in the stacking direction (the first direction D1), but the first restraining pressure P1 may be applied to the first region F1 in a direction intersecting the stacking direction (for example, the third direction D3). That is, the first restraining pressure P1 may be applied in any direction as long as the direction intersects the extending direction of the communication hole 31 (the second direction D2 in the above embodiment). Even when the first restraining pressure P1 is applied in such directions, a restraining pressure necessary for the first region F1 can be applied. Therefore, it is possible to prevent breakage of the sealing body 3 or the like due to pressing of the fluid injection nozzle 43.

In the above embodiment, the first restraining pressure P1 is larger than the second restraining pressure P2, but a magnitude relationship between the first restraining pressure P1 and the second restraining pressure P2 is not limited thereto. The first restraining pressure P1 and the second restraining pressure P2 may be set independently of each other considering the load due to pressing of the fluid injection nozzle 43 and the expansion force of the internal space S. As a result, the first restraining pressure P1 may be smaller than the second restraining pressure P2 or the first restraining pressure P1 and the second restraining pressure P2 may be equal to each other.

In the above embodiment, when the electricity storage module 1 is disposed in the decompression chamber 42, the electricity storage module 1 is mounted on the flat pallet 48, but a protrusion equivalent to the protrusion 65 of the second restraining member 45 may be provided in the pallet 48. Here, since the electrode stacked body 2 can be interposed between a pair of protrusions, contact of the second restraining member 45 with the electrode stacked body 2 can be more reliably ensured. Therefore, even when the dimension between the electrode stacked body 2 and the sealing body 3 is greatly different, the restraining force to the electrode stacked body 2 by the second restraining member 45 can be more appropriately applied.

The sealing body 3 may be configured with only the sealing material 21 without the spacer 22. Here, the communication hole 31 is formed by forming a notch or a hole in a part of the sealing material 21, and the welded end portion 23 is formed by welding outer edge portions of the sealing materials 21 adjacent to each other in the stacking direction.

The first restraining member 44 and the second restraining member 45 may not necessarily be provided in the decompression chamber 42. For example, the first restraining member 44 and the second restraining member 45 may be provided in the pallet 48, and the electricity storage module 1 as a workpiece may be restrained by the first restraining member 44 and the second restraining member 45 before being introduced into the decompression chamber 42.

The second restraining member 45 may not necessarily include the protrusion 65. Even then, the first region F1 provided with the plurality of communication holes 31 and the second region F2 including the internal space S in the sealing body 3 can be restrained by the first restraining member 44 and the second restraining member 45 by mutually independent restraining pressures. Therefore, even when the electrode stacked body 2 and the sealing body 3 have different dimensions, it is possible to apply a restraining pressure necessary for each of the first region F1 and the second region F2.

In the above embodiment, the internal space S of the electricity storage module 1 is exhausted together with the decompression of the chamber 47, but the internal space S may be exhausted separately from the decompression of the chamber 47 via the nozzle. An embodiment in which the injection step is performed without disposing the electricity storage module 1 in the decompression chamber 42 may be adopted. Here, for example, a restraining jig including the first restraining member 44 and the second restraining member 45 may be attached to the electricity storage module 1 as a workpiece in advance, and then the injection step may be performed. Decompression of the internal space S may be performed via a nozzle or may not be performed. The fluid injection nozzle 43 can also be used as a nozzle that separately exhausts the internal space S. Here, for example, a switching unit for switching a connection destination of the fluid injection nozzle 43 between a tank of the fluid F and a vacuum pump may be provided on the proximal end side of the fluid injection nozzle 43, and the connection destination of the fluid injection nozzle 43 may be switched between during decompression of the internal space S and during injection of the fluid F.

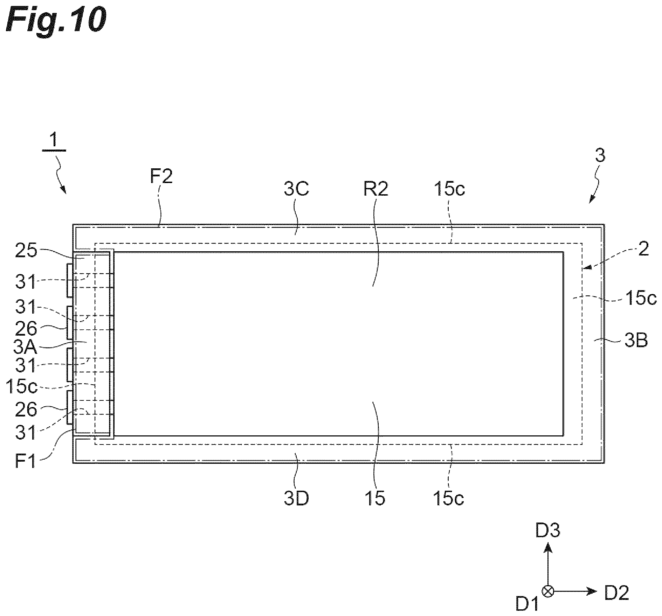

As illustrated in FIG. 10, the first restraining member 44 may restrain only the build-up portion 25 of the sealing body 3 by the first restraining pressure P1. Here, when viewed from the first direction D1, an outer edge of the first region F1 restrained by the first restraining member 44 coincides with an outer edge of the build-up portion 25. In other words, the first region F1 may be a rectangular region (having a pair of long sides and a pair of short sides) corresponding to the build-up portion 25 in the wall portion 3A. Since the plurality of communication holes 31 are provided in the build-up portion 25 when viewed from the first direction D1, the first region F1 is a region including the plurality of communication holes 31 also in the example of FIG. 10. When the first region F1 is a region corresponding to the build-up portion 25, a shape of the restraining plate 62 of the first restraining member 44 may be a rectangular shape corresponding to the build-up portion 25.

When the first region F1 is a region corresponding to the build-up portion 25, the second restraining member 45 may restrain a region of the sealing body 3 excluding the build-up portion 25 as the second region F2. Here, the second region F2 includes a region excluding the build-up portion 25 in the sealing material 21 provided in the current collector 15 of the positive terminal electrode 12 and the negative terminal electrode 13. Additionally, the second region F2 includes a rectangular region (having a pair of long sides and a pair of short sides) corresponding to the exposed portions R1 and R2 and the three wall portions 3B, 3C, and 3D of the sealing body 3 excluding the wall portion 3A. That is, when viewed from the first direction D1, the second region F2 has a shape in which a region corresponding to the build-up portion 25 is cut from a rectangle corresponding to the exposed portions R1 and R2 and the wall portions 3A, 3B, 3C, and 3D. Here, a shape of the restraining plate 62 of the second restraining member 45 may be a shape in which a region corresponding to the build-up portion 25 is cut from a rectangle corresponding to the exposed portions R1 and R2 and the wall portions 3A, 3B, 3C, and 3D to match the shape of the second region F2.

With respect to the first region F1 and the second region F2 as described above, in the manufacturing device 41, the first region F1 and the second region F2 can be restrained by the first restraining member 44 and the second restraining member 45 by mutually independent restraining pressures. Therefore, even when the electrode stacked body 2 and the sealing body 3 have different dimensions, it is possible to apply a restraining pressure necessary for each of the first region F1 and the second region F2.

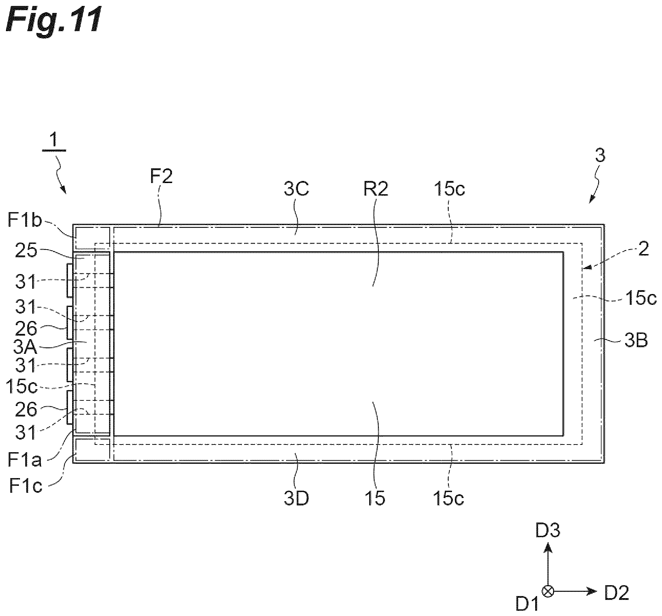

As illustrated in FIG. 11, the first region F1 may include a plurality of regions. In the example of FIG. 11, the first region F1 includes a first divided region F1a, a second divided region F1b, and a third divided region F1c. The first divided region F1a may be a region corresponding to the build-up portion 25. The second divided region F1b may be a region on one side of long sides facing each other in the sealing body 3 (a region on the wall portion 3C side) in a region obtained by excluding the build-up portion 25 from the wall portion 3A. The third divided region F1c may be a region on the other side of the long sides facing each other in the sealing body 3 (a region on the wall portion 3D side) in a region obtained by excluding the build-up portion 25 from the wall portion 3A.

When the first region F1 includes a plurality of regions, the first restraining member 44 may include a plurality of cylinders and a plurality of restraining plates to correspond to the plurality of regions. The first restraining member 44 may independently control the restraining pressure for each of the plurality of regions. For the first region F1 illustrated in FIG. 11, the first restraining member 44 may include a restraining plate and a cylinder for restraining the first divided region F1a, a restraining plate and a cylinder for restraining the second divided region F1b, and a restraining plate and a cylinder for restraining the third divided region F1c. Here, the first restraining member 44 may independently control a restraining pressure that restrains the first divided region F1a, a restraining pressure that restrains the second divided region F1b, and a restraining pressure that restrains the third divided region F1c. As a result, even when the electrode stacked body 2 and the sealing body 3 have different dimensions, it is possible to apply a restraining pressure necessary for each of the first divided region F1a, the second divided region F1b, and the third divided region F1c.

### Reference Signs List

- 1: Electricity storage module
- 2: Electrode stacked body
- 3: Sealing body
- 11: Bipolar electrode (electrode)
- 12: Positive terminal electrode (electrode)
- 13: Negative terminal electrode (electrode)
- 15: Current collector
- 15c: Peripheral edge portion
- 21: Sealing material
- 22: Spacer
- 22a: Edge
- 23s: Side surface
- 31: Communication hole
- 31A: Opening
- 41, 71: Manufacturing device
- 42: Decompression chamber
- 43: Fluid injection nozzle
- 44 (44A, 44B): First restraining member
- 45: Second restraining member
- 65: Protrusion
- F: Fluid
- F1: First region
- F2: Second region
- P1: First restraining pressure
- P2: Second restraining pressure
- R1, R2: Exposed portion
- S: Internal space

## Claims

1. A manufacturing device for an electricity storage module used for manufacturing an electricity storage module, the electricity storage module including
an electrode stacked body in which a plurality of electrodes each including a current collector are stacked, and
a sealing body provided at a peripheral edge portion of each of the current collectors to surround the electrode stacked body, configured to seal a plurality of internal spaces located between the current collectors adjacent to each other in a stacking direction, and provided with a plurality of communication holes communicating with each of the plurality of internal spaces, the manufacturing device comprising:
a fluid injection nozzle configured to inject a fluid into each of the plurality of internal spaces via the communication hole by pressing the fluid injection nozzle against a periphery of an opening of the communication hole on a side surface of the sealing body;
a first restraining member configured to restrain a first region provided with the plurality of communication holes in the sealing body; and
a second restraining member provided independently of the first restraining member and configured to restrain a second region including the internal space in the stacking direction.

2. The manufacturing device for an electricity storage module according to claim 1, wherein a first restraining pressure by the first restraining member is larger than a second restraining pressure by the second restraining member.

3. The manufacturing device for an electricity storage module according to claim 1 or 2, wherein
the sealing body includes a plurality of sealing materials covering the peripheral edge portion of each of the current collectors and a spacer interposed between the sealing materials adjacent to each other in the stacking direction, and
the first restraining member restrains a region where the sealing material and the spacer overlap in the stacking direction as the first region.

4. The manufacturing device for an electricity storage module according to any one of claims 1 to 3, the device further comprising:
a decompression chamber in which the electricity storage module is disposed, wherein
the first restraining member and the second restraining member are provided in the decompression chamber.

5. The manufacturing device for an electricity storage module according to any one of claims 1 to 3, the device further comprising:
a decompression chamber in which the electricity storage module is disposed, wherein
the first restraining member is provided in the decompression chamber, and
wall portion of the decompression chamber constitutes the second restraining member.

6. The manufacturing device for an electricity storage module according to any one of claims 1 to 5, wherein the second restraining member is provided with a protrusion corresponding to an exposed portion of the electrode stacked body exposed from the sealing body.

7. A manufacturing method for an electricity storage module used for manufacturing an electricity storage module, the electricity storage module including
an electrode stacked body in which a plurality of electrodes each including a current collector are stacked, and
a sealing body provided at a peripheral edge portion of each of the current collectors to surround the electrode stacked body, configured to seal a plurality of internal spaces located between the current collectors adjacent to each other in a stacking direction, and provided with a plurality of communication holes communicating with each of the plurality of internal spaces, the manufacturing method comprising:
an injection step of injecting a fluid into each of the plurality of internal spaces via the communication hole by pressing a fluid injection nozzle against a periphery of an opening of the communication hole on a side surface of the sealing body, wherein
in the injection step,
a first region provided with the plurality of communication holes in the sealing body is restrained by a first restraining member, and
a second region including the internal space is restrained in the stacking direction by a second restraining member provided independently of the first restraining member.
